# EUROPEAN PATENT SPECIFICATION

(11) **EP 4 643 165 B1**
(45) Date of publication and mention of the grant of the patent: **07.10.2026**
(21) Application number: 23817177.1
(22) Date of filing: 27.11.2023
(51) Int. Cl.: G02B 5/18, F21V 8/00, G02B 27/01

(54) **DISPLAY STRUCTURE AND DISPLAY DEVICE**
ANZEIGESTRUKTUR UND ANZEIGEVORRICHTUNG
STRUCTURE D'AFFICHAGE ET DISPOSITIF D'AFFICHAGE

(30) Priority: 30.12.2022 FI 20226192
(43) Date of publication of application: 05.11.2025
(73) Proprietor: Dispelix Oy, 02130 Espoo (FI)
(72) Inventor: OLKKONEN, Juuso, 02360 Espoo (FI); VARTIAINEN, Ismo, 00250 Helsinki (FI)
(74) Representative: Papula Oy
(86) International application number: PCT/FI2023/050647
(87) International publication number: WO 2024/141696

(56) References cited:
- CN-A- 114 442 211
- CN-A- 114 879 292
- FR-A1- 3 122 033
- US-A1- 2021 397 009
- US-A1- 2022 128 817

## Description

### FIELD OF TECHNOLOGY

This disclosure concerns display devices. In particular, some embodiments concern waveguide-based display devices with diffractive out-coupling gratings, and structures therefor.

### BACKGROUND

An out-coupling grating of a waveguide-based display device typically couples light out of a waveguide both towards and away from the user's eyes. In many applications, for example, in head-mounted see-through display devices (e.g., smart glasses), coupling of light away from the user's eye(s), i.e., towards the world side, may be undesirable for a variety of reasons, including energy efficiency, information security, and aesthetics.

Publication US 2021/397009 A1 discloses a surface-relief grating including a plurality of grating ridges. The plurality of grating ridges includes a first set of grating ridges characterized by a first refractive index, and a second set of grating ridges interleaved with the first set of grating ridges and characterized by a second refractive index different from the first refractive index. The plurality of grating ridges is imprinted in a polymer layer by a nanoimprint lithography process and is exposed to a light pattern to form the first set of grating ridges and the second set of grating ridges that have different refractive indices.

### SUMMARY

This summary is provided to introduce a selection of concepts in a simplified form that are further described below in the detailed description. This summary is not intended to identify key features or essential features of the claimed subject matter, nor is it intended to be used to limit the scope of the claimed subject matter. According to a first aspect, a display structure, comprises: a waveguide comprising a first face and a second face for confining light in the waveguide by total internal reflection, the second face arranged towards a thickness direction from the first face; and a diffractive out-coupling grating arranged on the first face, wherein the out-coupling grating comprises a plurality of ridges, wherein each of the ridges comprises a first layer and a second layer, the second layer being arranged over the first layer, wherein the second layer extends from the first face in a direction forming a slant angle with the thickness direction of the waveguide.

The slant angle is a second slant angle, and wherein the first layer extends from the first face in a first direction forming a first slant angle with the thickness direction of the waveguide.

According to an embodiment of the first aspect, the second slant angle is greater than or equal to 30° and/or less than to 70°.

According to an embodiment of the first aspect, the first slant angle is less than or equal to 70°.

According to an embodiment of the first aspect, the first slant angle is equal to zero.

The second slant angle is larger than the first slant angle. According to an embodiment of the first aspect, a slant angle difference between the second slant angle and the first slant angle is greater than or equal to 5°, or to 10°, or to 15°, and/or less than or equal to 30°, or to 40°, or to 50°.

According to a comparative example not covered by the claims, the second slant angle is equal to the first slant angle. According to an embodiment of the first aspect, the first layer has a first height, the first height is greater than or equal to 10 nm, and/or less than or equal to 50 nm.

According to an embodiment of the first aspect, the second layer has a second height, the second height is greater than or equal to 50 nm and/or less than or equal to 150 nm.

The first layer comprises a first material having a first refractive index at a visible wavelength. According to an embodiment of the first aspect, the first refractive index is greater than or equal to 1.8 and/or less than or equal to 2.6.

The second layer comprises a second material having a second refractive index at a visible wavelength. According to an embodiment of the first aspect, the second refractive index is greater than or equal to 1.2 and/or less than or equal to 1.7.

The first layer comprises a first material, the second layer comprises a second material. According to an embodiment of the first aspect, the first material is titanium dioxide, and the second material is silicon dioxide.

According to a second aspect, a display device comprises a display structure according to any embodiment of the first aspect.

According to an embodiment of the second aspect, the display device is implemented as a see-through display device, or as a head-mounted display device.

### BRIEF DESCRIPTION OF THE DRAWINGS

The present disclosure will be better understood from the following detailed description read in light of the accompanying drawings, wherein:
**FIG. 1A** shows a cross-sectional view of a display structure according to an example embodiment,
**FIG. 1B** shows a cross-sectional view of a display structure according to an example embodiment,
**FIG. 2** shows a cross-sectional view of a ridge of a display structure according to an example embodiment,
**FIG. 3** shows a cross-sectional view of a ridge of a display structure according to a comparative example not covered by the claims.
**FIG. 4** shows a cross-sectional view of a ridge of a display structure according to another example embodiment, and
**FIG. 5** shows a cross-sectional view of a substrate for a diffractive out-coupling grating according to an example embodiment,
**FIG. 6** illustrates display device, and
**FIG. 7** illustrates a vehicle equipped with a display device.

Unless specifically stated to the contrary, any drawing of the aforementioned drawings may be not drawn to scale such that any element in said drawing may be drawn with inaccurate proportions with respect to other elements in said drawing in order to emphasize certain structural aspects of the embodiment of said drawing.

Moreover, corresponding elements in the embodiments of any two drawings of the aforementioned drawings may be disproportionate to each other in said two drawings in order to emphasize certain structural aspects of the embodiments of said two drawings.

### DETAILED DESCRIPTION

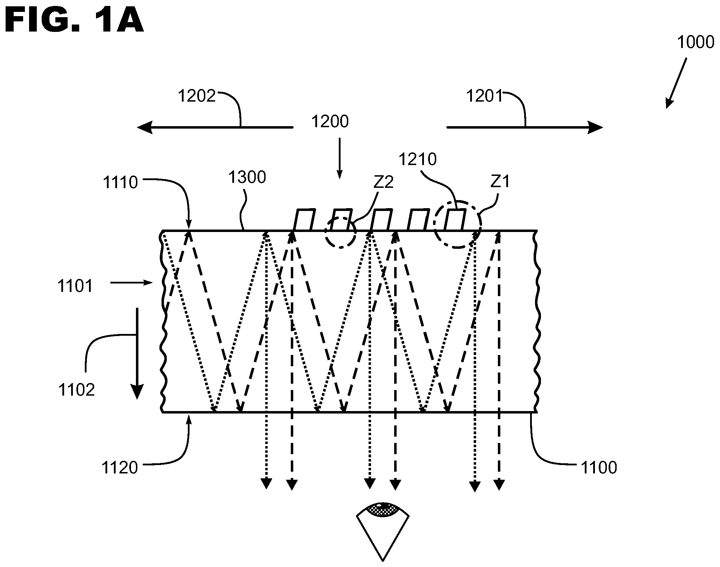

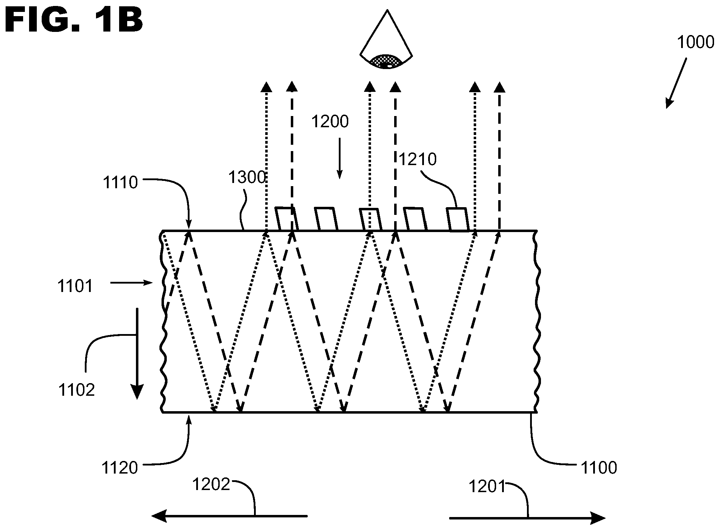

FIG. 1A and 1B depict a partial cross-sectional view of a display structure 1000 according to an example embodiment and a magnified view of a part of the display structure 1000.

In this specification, a "display device" may refer to an operable output device, e.g., electronic device, for visual presentation of images and/or data. A display device may generally comprise any part(s) or element(s) necessary or beneficial for visual presentation of images and/or data, for example, a power unit; an optical engine; a combiner optics unit, such as a waveguide-based combiner optics unit; an eye tracking unit; a head tracking unit; a gesture sensing unit; and/or a depth mapping unit. A display device may or may not be a portable display device, for example, a head-mounted display device, and/or a see-through display device.

Herein, a "head-mounted display device" may refer to a display device configured to be worn on the head, as part of a piece of headgear, and/or on or over the eyes.

Further, a "see-through display device" or "transparent display device" may refer to a display device allowing its user to see the images and/or data shown on the display device as well as to see through the display device.

Throughout this disclosure, a "display structure" may refer to at least part of an operable display device. Additionally of alternatively, a display structure may refer to a structure suitable for use in a display device.

In the example embodiments of FIG. 1A and 1B, the display structure 1000 comprises a waveguide 1100.

In this disclosure, a "waveguide" may refer to an optical waveguide. Additionally or alternatively, a waveguide may refer to a two-dimensional waveguide, wherein light may be confined along a thickness direction of said waveguide.

The waveguide 1100 of the example embodiments of FIG. 1A and 1B comprises a first face 1110 and a second face 1120 for confining light 1101 in the waveguide 1100 by total internal reflection. In this disclosure, "total internal reflection" may refer to total or substantially total internal reflection. The second face is arranged opposite the first face 1110 and towards a thickness direction 1102 therefrom.

In this disclosure, a "face" of a waveguide may refer to a part of a surface of said waveguide viewable from or facing a certain viewing direction. Additionally or alternatively, faces of a waveguide may refer to surfaces suitable for or configured to confine light in said waveguide by total internal reflection.

In the example embodiments of FIG. 1A and 1B, the display structure 1000 also comprises a diffractive out-coupling grating 1200 arranged on the first face 1110.

In this specification, a "diffraction grating", may refer to an optical grating the operation of which is based on diffraction of visible light. Generally, a diffraction grating may comprise one or more structural features with at least one dimension of the order of the wavelengths of visible light, for example, at least one dimension less than one micrometer. Generally, a diffraction grating may be implemented as a single-region diffraction grating or as a multi-region diffraction grating. Diffraction gratings may generally be implemented, at least, as surface relief diffraction gratings or volume holographic diffraction gratings, and they may be configured to function as transmission- and/or reflection-type diffraction gratings. Naturally, a "diffractive out-coupling grating" may then refer to a diffraction grating configured to couple light out of a waveguide. Generally, a diffractive out-coupling grating may further be configured to perform exit pupil expansion by pupil replication.

Herein, "exit pupil expansion" may refer to a process of distributing light within a waveguide in a controlled manner so as to expand a portion of said waveguide where out-coupling of light occurs. Further, "pupil replication" may refer to an exit pupil expansion process, wherein a plurality of exit sub-pupils are formed in an imaging system.

As illustrated on FIGs 1A, the out-coupling grating 1200 may be configured to couple light 1101 out of the waveguide 1100 via the second face 1120. Consequently, the out-coupling grating 1200 may be configured to function as a reflection-type diffraction grating.

As illustrated on FIGs 1B, the out-coupling grating 1200 may be configured to couple light 1101 out of the waveguide 1100 via the first face 1110. Consequently, the out-coupling grating 1200 may be configured to function as a transmission-type diffraction grating.

As illustrated on FIGs 1A and 1B, the out-coupling grating 1200 may comprise a ridge 1210. In FIGs 1A and 1B, the ridges 1210 extend longitudinally perpendicular to the plane of the drawing.

In the example embodiments of FIGs 1A and 1B, the out-coupling grating 1200 comprises a plurality of ridges with cross-sectional shapes identical to those of the ridge 1210. In other embodiments, an out-coupling grating may or may not comprise a plurality, i.e., two or more, three or more, four or more, etc., of ridges with cross-sectional shapes identical to those of a ridge of said out-coupling grating.

In the example embodiments of FIG. 1A and 1B, the out-coupling grating 1200 is specifically configured to couple out light 1101, which is confined in the waveguide 1100 by total internal reflection and is guided towards the primary lateral direction 1201. In other embodiments, an out-coupling grating may or may not be configured to couple light guided towards a primary lateral direction out of a waveguide via a second face thereof. For example, in some embodiments, an out-coupling grating may be configured to couple light guided towards any suitable direction, for example, a direction perpendicular to a thickness direction and forming an acute angle, such as an angle less than or equal to 45°, or to 30°, or to 20°, or to 15°, or to 10°, or to 5°, with a primary lateral direction.

The out-coupling grating 1200 of the example embodiments of FIG. 1A and 1B may be configured to perform exit pupil expansion by pupil replication along the primary lateral direction 1201. In other embodiments, an out-coupling grating may or may not be configured to perform exit pupil expansion by pupil replication along at least a primary lateral direction, i.e., along a primary lateral direction and, optionally, along one or more other directions perpendicular to a thickness direction.

As illustrated on FIGs 1A, the ridge 1210 may be slanted in the primary lateral direction 1201. Consequently, the out-coupling grating 1200 may be configured to couple light 1101 out of the waveguide 1100 via the second face 1120. Consequently, the out-coupling grating 1200 may be configured to function as a reflection-type diffraction grating.

As illustrated on FIGs 1B, the ridge 1210 may be slanted in a secondary lateral direction 1202 opposite to the primary lateral direction 1201. Consequently, the out-coupling grating 1200 may be configured to couple light 1101 out of the waveguide 1100 via the first face 1110. Consequently, the out-coupling grating 1200 may be configured to function as a transmission-type diffraction grating.

The display structure 1000 of the example embodiments of FIG. 1A and 1B may have been formed at least partly using nanoimprint lithography. In other embodiments, any suitable fabrication method(s), for example, nanoimprint lithography and/or grayscale electron-beam lithography, may be used.

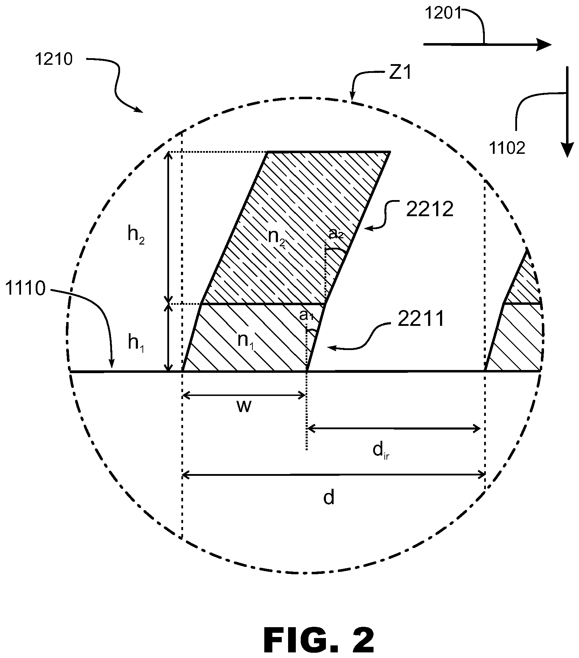

FIG. 2 depicts a zoomed view of zone 1 (Z1) as indicated on FIG. 1A. FIG. 2 depicts a ridge 1210 of a display structure according to an example embodiment. The example embodiment of FIG. 2 may be in accordance with any of the example embodiments disclosed with reference to and/or in conjunction with FIG. 1A or 1B. Additionally or alternatively, although not explicitly shown in FIG. 2, the example embodiment of FIG. 2 or any part thereof may generally comprise any features and/or elements of the example embodiments of FIG. 1A or 1B which are omitted from FIG. 2.

As illustrated on FIG. 2, the out-coupling grating 1200 has a period (d) and an inter-ridge distance (dᵢᵣ) measured along the primary lateral direction 1201.

In example embodiments, d may be in a range of 200 nm to 500 nm.

In example embodiments, dᵢᵣ may be in a range of 200 nm to 500 nm.

In example embodiments, a fill factor F may be in a range of 0.2 to 0.8. The fill factor F is the fraction of the grating period that is filled with the grating material.

A ridge 1210 has a width (w) measured along the primary lateral direction 1201.

In example embodiments, w may be in a range of 50 to 200 nm.

As depicted in FIG. 2, the ridge 1210 may comprise a first layer 2211 and a second layer 2212. The first layer 2211 of the ridge is formed over the first face 1110 of the waveguide. The second layer 2212 of the ridge is formed over the first layer 2211 of the ridge. In some example embodiments, the first layer 2211 may be formed directly on the first face 1110, and the second layer 2212 may be formed directly on the first layer 2211. In other example embodiments, the ridge 1210 may comprise one or more additional layers between the first face 1110 and the first layer 2211, and/or between the first layer 2211 and the second layer 2212. The ridge 1210 may also comprise one or more additional layers on top of the second layer 2212.

In the example embodiment of FIG. 2, the first layer 2211 has a first height (h₁) measured along the thickness direction 1102, and the second layer 2212 has a second height (h₂) measured along the thickness direction 1102.

Herein, a "height" of a ridge portion may refer to a measure of the extent of said ridge layer along a thickness direction of a waveguide.

In example embodiments, the first height h₁ may be greater than or equal to 10 nm and/or less than or equal to 50 nm.

In example embodiments, the second height h₂ may be greater than or equal to 50 nm and/or less than or equal to 150 nm.

In example embodiments, a height ratio (rₕ) between h₁ and h₂ is greater than or equal to 0.2 and/or less than or equal to 0.4.

These specific values for the first height h₁, the second height h₂ and/or the height ratio (rₕ) may enable increasing the out-coupling efficiency of light towards a user's eye(s) and/or increasing the ratio of the out-coupling efficiency towards the user's eye(s) to the out-coupling efficiency towards the world side. The out-coupling efficiency of light towards a user's eye(s) may be considerable for both TE- and TM-polarized input light. An increase in such out-coupling efficiency compared to conventional solutions may be observed particularly for TM-polarized input light.

These specific values for the first height h₁, the second height h₂ and/or the height ratio (rₕ) may also increasing the uniformity of the distribution of the out-coupled light along the lateral direction, thereby improving exit pupil expansion.

The first layer 2211 of the ridge may comprise, consist essentially of, or consist of a first material having a first refractive index (n₁) at a visible wavelength (λᵥᵢₛ). The second layer 2212 of the ridge may comprise, consist essentially of, or consist of a second material having a second refractive index (n₂). The first refractive index (n₁) may be higher than the second refractive index (n₂).

In other example embodiments, the first layer 2211 and the second layer 2212 may comprise, consist essentially of, or consist of a same material.

In example embodiments, the first refractive index (n₁) is greater than or equal to 1.8, and/or less than or equal to 2.6.

In example embodiments, the second refractive index (n₂) is greater than or equal to 1.2 and/or less than or equal to 1.7.

In example embodiments, a refractive index difference (Δn) between n₂ and n₁ at λᵥᵢₛ may be greater than or equal to 0.5 and/or less than or equal to 1.

In some example embodiments, the values of n₁, n₂, and Δn may be considered at a λᵥᵢₛ of 500 nm. In other example embodiments, the values of n₁, n₂, and Δn may be considered at any suitable visible wavelength, i.e., any wavelength within a spectral range extending from 380 nm to 760 nm. For example, in some example embodiments, the relevant visible wavelength may be selected from the group consisting of 450 nm, 460 nm, 470 nm, 480 nm, 490 nm, 500 nm, 510 nm, 520 nm, 530 nm, 540 nm, 550 nm, 560 nm, 570 nm, 580 nm, 590 nm, 600 nm, 610 nm, 620 nm, 630 nm, 640 nm, and 650 nm.

These specific values for the first refractive index, the second refractive index, and/or the refractive index difference may increase the out-coupling efficiency of light towards a user's eye(s) and/or increase the ratio of the out-coupling efficiency towards the user's eye(s) to the out-coupling efficiency towards the world side, and/or increase the uniformity of the distribution of the out-coupled light along the lateral direction, thereby improving exit pupil expansion.

These specific values for the first refractive index, the second refractive index, and/or the refractive index difference may further enable reducing a height of the ridge, which may, in turn, facilitate fabrication of a display structure.

In example embodiments, the first material may be titanium dioxide (TiO₂), silicon nitride (Si3N4), or an oxide. In example embodiments, the first material may be the same material as the substrate.

In example embodiments, the second material may be Silicon dioxide (SiO₂), Magnesium fluoride (MgF2), Aluminum oxide (AL2O3), or a resin.

These specific materials for the first and second layer of the ridge may increase the out-coupling efficiency of light towards a user's eye(s) and/or increase the ratio of the out-coupling efficiency towards the user's eye(s) to the out-coupling efficiency towards the world side, and/or increase the uniformity of the distribution of the out-coupled light along the lateral direction, thereby improving exit pupil expansion.

These specific materials may further enable reducing a height of the ridge, which may, in turn, facilitate fabrication of a display structure.

In the example embodiment of FIG. 2, the second layer 2212 of the ridge is slanted. In other words, the second layer 2212 of the ridge 1210 extends in a direction that forms a slant angle (a₂) with the thickness direction 1102 of the waveguide 1100.

In particular, the slant angle (a₂) of the second layer 2212 may be defined as the angle between the axis of the second layer 2212 and the normal direction of the first face 1110 of the waveguide 1100.

Generally, such a slanted second layer of the ridge increases the out-coupling efficiency of light towards a user's eye(s) and/or increase the ratio of the out-coupling efficiency towards the user's eye(s) to the out-coupling efficiency towards the world side, and/or increase the uniformity of the out-coupling of light in a lateral direction thereby improving exit pupil expansion.

In example embodiments, the slant angle (a₂) of the second layer of the ridge may be greater than or equal to 30°and/or less than or equal to 70°.

These particular values for the slant angle of the second layer of the ridge may further increase the out-coupling efficiency of light towards a user's eye(s) and/or increase the ratio of the out-coupling efficiency towards the user's eye (s) to the out-coupling efficiency towards the world side, and/or increase the uniformity of the out-coupling of light in a lateral direction thereby improving exit pupil expansion.

In the example embodiment of FIG. 2, the first layer 2211 of the ridge is also slanted.

The first slant angle (a₁) of the first layer 2211 may be defined as the angle between the axis of the first layer 2211 and the normal direction of the first face 1110 of the waveguide 1100.

The second slant angle (a₂) of the second layer 2212 may be defined as the angle between the axis of the second layer 2212 and the normal direction of the first face 1110 of the waveguide 1100.

In the example embodiment of FIG. 2, the second layer 2212 is more slanted than the first layer 2211.

Generally, the second layer of the ridge being more slanted than the first layer of the ridge may further increase the out-coupling efficiency of light towards a user's eye(s) and/or increase the ratio of the out-coupling efficiency towards the user's eye(s) to the out-coupling efficiency towards the world side, and/or increase the uniformity of the out-coupling of light in a lateral direction thereby improving exit pupil expansion.

In example embodiments, the first slant angle a₁ may be less than or equal to 70°.

In example embodiments, the second slant angle (a₂) may be greater than or equal to 30° and/or less than or equal to 70°.

In example embodiments, the slant angle difference (Δa) between a₂ and a₁ is greater than or equal to 5°, or to 10°, or to 15°, and/or less than or equal to 30°, or to 40°, or to 50°.

These particular values for the first slant angle a₁, the second slant angle a₂, and/or the slant angle difference (Δa) may further increase the out-coupling efficiency of light towards a user's eye(s) and/or increase the ratio of the out-coupling efficiency towards the user's eye (s) to the out-coupling efficiency towards the world side, and/or increase the uniformity of the out-coupling of light in a lateral direction thereby improving exit pupil expansion.

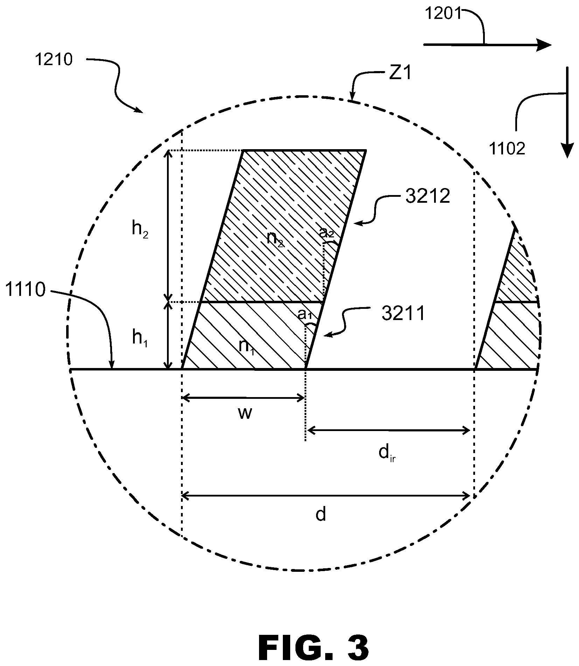

FIG. 3 depicts a zoomed view of zone 1 (Z1) as indicated on FIG. 1A. FIG. 3 depicts a ridge 1210 of a display structure according to an example embodiment.

Additionally or alternatively, although not explicitly shown in FIG. 3, the comparative example not covered by the claims of FIG. 3 or any part thereof may generally comprise any features and/or elements of the example embodiments of FIG. 1A, 1B or 2 which are omitted from FIG. 3.

In a manner similar to the ridge 1210 of the example embodiment of FIG. 2, the ridge 1210 of the example embodiment of FIG. 3 may comprise a first layer 3211 and a second layer 3212.

In the comparative example not covered by the claims of FIG. 3, the first layer 3211 extends in the same direction as the second layer 3212. In other words, the first slant (a₁) angle of the first layer 3211 is substantially the same as the second slant angle (a₂) of the second layer 3212.

In example embodiments, the slant angle of the first and second layers a₁= a₂ may be greater than or equal to 30° and/or less than or equal to 70°.

These particular values for the slant angle of the first and second layer of the ridge may further increase the out-coupling efficiency of light towards a user's eye(s) and/or increase the ratio of the out-coupling efficiency towards the user's eye (s) to the out-coupling efficiency towards the world side, and/or increase the uniformity of the out-coupling of light in a lateral direction thereby improving exit pupil expansion.

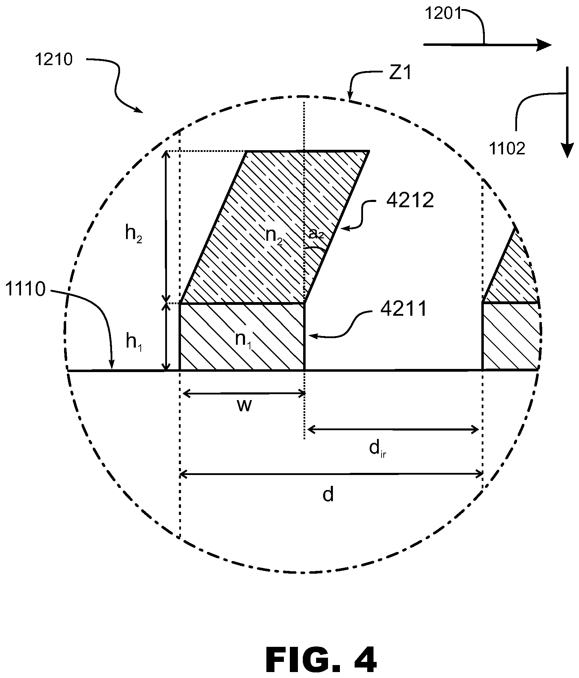

FIG. 4 depicts a zoomed view of zone 1 (Z1) as indicated on FIG. 1A. FIG. 4 depicts a ridge 1210 of a display structure according to an example embodiment. The example embodiment of FIG. 4 may be in accordance with any of the example embodiments disclosed with reference to and/or in conjunction with FIG. 1A, 1B to 2.

Additionally or alternatively, although not explicitly shown in FIG. 4, the example embodiment of FIG. 4 or any part thereof may generally comprise any features and/or elements of the example embodiments of FIG. 1A, 1B to 2 which are omitted from FIG. 4.

In a manner similar to the ridge 1210 of the example embodiment of FIG. 2, the ridge 1210 of the example embodiment of FIG. 4 may comprise a first layer 4211 and a second layer 4212.

In the example embodiment of FIG. 4, the first layer 4211 is not slanted but the second layer 4212 is slanted. In other words, the first layer 4211 extends in the thickness direction 1102, and the second layer 4212 extends in a direction that forms a slant angle (a₂) with the thickness direction 1102.

Generally, a non-slanted first layer together with a slanted second layer may further increase the out-coupling efficiency of light towards a user's eye(s) and/or increase the ratio of the out-coupling efficiency towards the user's eye (s) to the out-coupling efficiency towards the world side, and/or increase the uniformity of the out-coupling of light in a lateral direction thereby improving exit pupil expansion.

In example embodiments, the second slant angle (a₂) is greater than or equal to 30° and/or less than or equal to 70°.

These particular values for the slant angle a₂ of the second layer may further increase the out-coupling efficiency of light towards a user's eye(s) and/or increase the ratio of the out-coupling efficiency towards the user's eye (s) to the out-coupling efficiency towards the world side, and/or increase the uniformity of the out-coupling of light in a lateral direction thereby improving exit pupil expansion.

The out-coupling grating 1200 may be configured to minimize coupling of light 1101 out of the waveguide 1100 via the first face 1110. In particular, each of rₕ, h₁, h₂, w, F, d, dᵢᵣ, a₁, and a₂ is selected to minimize coupling of light 1101 out of the waveguide 1100 towards the world side. In other embodiments, an out-coupling grating may or may not be configured to minimize coupling of light out of a waveguide via a first face. In embodiments, wherein an out-coupling grating is configured to minimize coupling of light out of a waveguide via a first face, one or more of rₕ, h₁, h₂, w, F, d, dᵢᵣ, a₁, and a₂ may be selected to minimize coupling of light out of said waveguide via said first face.

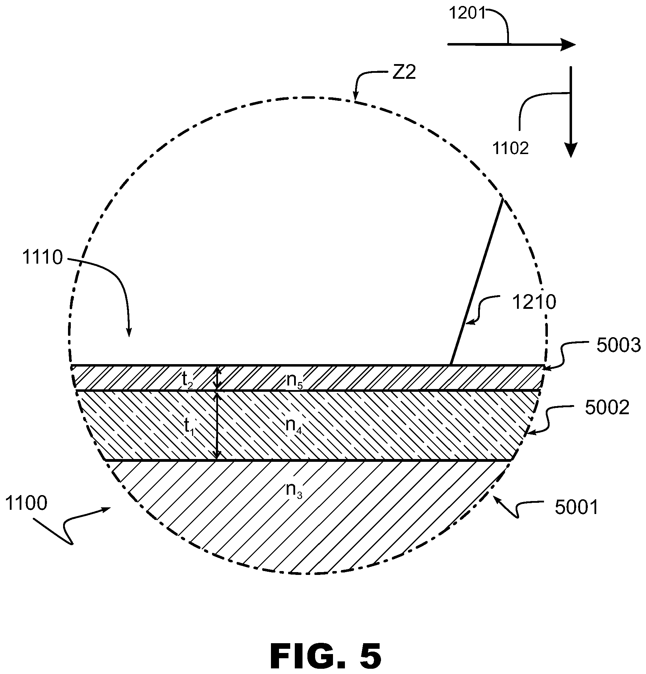

FIG. 5 depicts a substrate for the diffractive out-coupling grating according to an example embodiment. The example embodiment of FIG. 5 may be in accordance with any of the example embodiments disclosed with reference to and/or in conjunction with FIG. 1A, 1B ,2 and 4.

Additionally or alternatively, although not explicitly shown in FIG. 5, the example embodiment of FIG. 5 or any part thereof may generally comprise any features and/or elements of the example embodiments of FIG. 1A, 1B, 2 and 4 which are omitted from FIG. 5.

As illustrated on FIG. 5, the waveguide 1100 forms a substrate for the out-coupling grating 1200. In some embodiments, the substrate may be at least partly, i.e., partly or entirely, formed into the waveguide 1100. The substrate may comprise one or more of a wafer 5001, an under-layer 5002 and a coating 5003. The under-layer 5002 is formed over the wafer 5001. The coating 5003 is formed over the under-layer 5002. In some embodiments, the under-layer 5002 may be formed directly on the wafer 5001, and the coating 5003 may be formed directly on the under-layer 5002. In other embodiments, the substate may comprise one or more additional layers between the wafer 5001 and the under-layer 5002, and/or between the under-layer 5002 and the coating 5003.

The wafer 5001 may comprise, consist essentially of, or consist of a third material having a third refractive index (n₃) at a visible wavelength (λᵥᵢₛ). The third refractive index (n₃) may be comprised within a range of 1.5 to 2.2.

The under-layer 5002 may comprise, consist essentially of, or consist of a fourth material having a fourth refractive index (n₄). In example embodiments, the fourth refractive index (n₄) may be greater or equal to 1.9. In example embodiments, the fourth material may be titanium dioxide (TiO₂), silicon nitride (Si3N4), or an oxide.

The under-layer 5002 may have a first thickness (t₁). Herein, a "thickness" of a layer may refer to a measure of the extent of said layer along a thickness direction of a waveguide.

In example embodiments, t₁ may be greater than or equal to 10 nm and/or less than or equal to 200 nm.

The coating 5003 may comprise, consist essentially of, or consist of a fifth material having a fifth refractive index (n₅). In example embodiments, the fifth refractive index (n₅) may be comprised within a range of x to x. In example embodiments, the fifth material may be aluminum oxide (Al2O3), or hafnium oxide HfO2.

The coating 5003 may have a second thickness (t₂).

In example embodiments, t₂ may be greater than or equal to 10 nm and/or less than or equal to 100 nm.

The coating 5003 may be formed using an etch-stop technique.

Generally, an out-coupling grating being formed over such a coating and/or such an under-layer may facilitate fabrication of a display structure and/or facilitate tuning the diffraction efficiency of an out-coupling grating without altering the refractive index of a waveguide. In other embodiments, a display structure may or may not comprise a coating and/or an under-layer on a first face of a waveguide. In embodiments, wherein a display structure comprises a coating on a first face of a waveguide, an out-coupling grating may or may not be formed in said coating.

Above, mainly structural and material-related features of display structures are discussed. In the following, more emphasis will lie on features related to display devices. What is said above about the ways of implementation, definitions, details, and advantages applies, mutatis mutandis, to the display device aspect discussed below. The same applies vice versa.

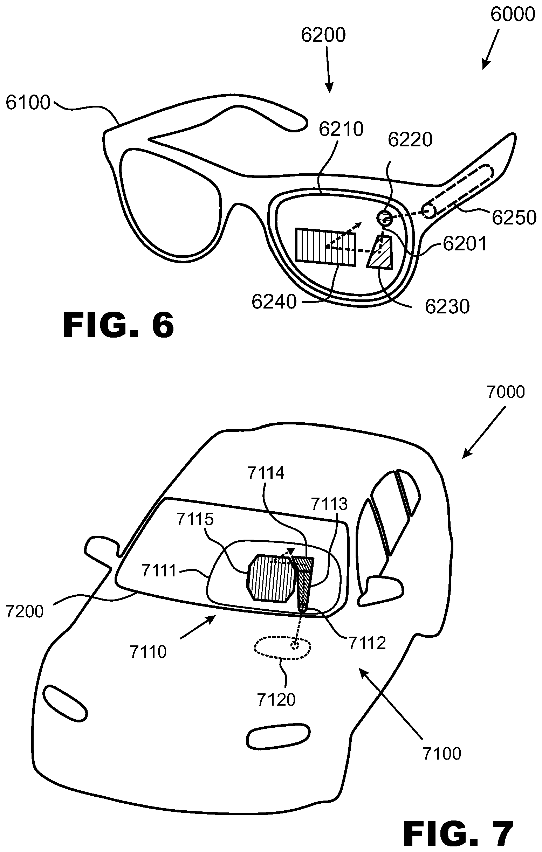

FIG. 6 depicts a display device 6000 according to an example embodiment. The example embodiment of FIG. 6 may be in accordance with any of the example embodiments disclosed with reference to and/or in conjunction with any of FIGs 1A, 1B to 5. Additionally or alternatively, although not explicitly shown in FIG. 6, the example embodiment of FIG. 6 or any part thereof may generally comprise any features and/or elements of any of the example embodiments of FIGs 1A, 1B 2, 4 and 5 which are omitted from FIG. 6.

In the example embodiment of FIG. 6, the display device 6000 is implemented as a see-through head-mounted display device, more specifically, as spectacles comprising a see-through display. In other embodiments, a display device may be implemented in any suitable manner, for example, as a see-through and/or as a head-mounted display device.

In the example embodiment of FIG. 6, the display device 6000 comprises a frame 6100 and a display structure 6200 supported by the frame 6100. In other embodiments, a display device may or may not comprise such frame.

In the example embodiment of FIG. 6, the display structure 6200 comprises a waveguide 6210, an in-coupling grating 6220 for coupling light 6201 into the waveguide 6210, an intermediate pupil expansion structure 6230 configured to receive light 6201 from the in-coupling grating 6220, and a reflection-type out-coupling grating 6240 configured to receive light 6201 from the intermediate pupil expansion structure 6230. In other embodiments, a display structure may or may not comprise such in-coupling grating and/or such intermediate pupil expansion structure.

As shown in FIG. 6, the display device 6000 further comprises an optical engine 6250 configured to direct light 6201 into the waveguide 6210 for propagation in the waveguide 6210 by total internal reflection. In other embodiments, a display device may or may not comprise such optical engine.

FIG. 7 schematically depicts a vehicle 7000 according to an example embodiment. In the example embodiment of FIG. 7, the vehicle 7000 is implemented as a car. In other embodiments, a vehicle may or may not be implemented as a car. For example, in some embodiments, a vehicle may be implemented as a motor vehicle, such as a car, a truck, a motorcycle, or a bus; a railed vehicle, such as a train or a tram; a piece of heavy machinery, such as a tractor or a harvester; a watercraft, such as a ship or a boat; an aircraft, such as an airplane or a helicopter; or a spacecraft, such as a space capsule or a spaceplane.

In the example embodiment of FIG. 7, the vehicle 7000 comprises a vehicular display device 7100. Even if not explicitly shown in FIG. 7, the example embodiment of FIG. 7 or any part thereof may generally comprise any features and/or elements disclosed with reference to or in conjunction with any of FIGs 1 2, 4 and 5.

The vehicular display device 7100 of the example embodiment of FIG. 7 comprises a display structure 7110 and an optical engine 7120. The display structure 7110 comprises a waveguide 7111, an in-coupling structure 7112, a primary exit pupil expansion structure 7113, a secondary exit pupil expansion structure 7114, and an out-coupling structure 7115. In other embodiments, a vehicular display device may or may not comprise an optical engine.

The vehicular display device 7100 of the example embodiment of FIG. 7 is implemented as a head-up display device. In other embodiments, a display device may or may not be implemented as a head-up display device.

Herein, a "head-up display device" may refer to a see-through vehicular display device configured to present images and/or data to a steerer, e.g., a driver or a pilot, of a vehicle without requiring said steerer to look away from usual viewpoints thereof. Generally, a head-up display device may or may not be implemented as a vehicle-mounted display device.

In the example embodiment of FIG. 7, the vehicle 7000 further comprises a laminated window 7200, and the waveguide 7111 extends within the window 7200. In other embodiments, one or more waveguides may be arranged in any suitable manner(s). In some embodiments, a waveguide may extend within a laminated window, such as a windshield. In some embodiments, a vehicle may comprise a vehicular display device comprising a waveguide arranged at a distance from a window.

It is obvious to a person skilled in the art that with the advancement of technology, the basic idea of the invention may be implemented in various ways. The invention and its embodiments are thus not limited to the examples described above, instead they may vary within the scope of the claims.

It will be understood that any benefits and advantages described above may relate to one embodiment or may relate to several embodiments. The embodiments are not limited to those that solve any or all of the stated problems or those that have any or all of the stated benefits and advantages.

The term "comprising" is used in this specification to mean including the feature(s) or act(s) followed thereafter, without excluding the presence of one or more additional features or acts. It will further be understood that reference to 'an' item refers to one or more of those items.

**REFERENCE SIGNS AND SYMBOLS**

| | | | |
|---|---|---|---|
| h₁ | first height | | |
| h₂ | second height | | |
| rₕ = h₂/h₁ | height ratio | | |
| d | period | | |
| dᵢᵣ | inter-ridge distance | | |
| r_{d} = dᵢᵣ/d | distance ratio | | |
| F = 1 - r_{d} | fill factor | | |
| w | first width | | |
| n₁ | first refractive index | | |
| n₂ | second refractive index | | |
| λᵥᵢₛ | visible wavelength | | |
| Δn = n₂-n₁ | refractive index difference | | |
| n₃ | third refractive index | | |
| n₄ | fourth refractive index | | |
| n₅ | fifth refractive index | | |
| t₁ | first thickness | | |
| t₂ | second thickness | | |
| 1000 | display structure | Z2 | zoom 2 |
| 1100 | waveguide | 2211 | first layer of the ridge |
| 1101 | light | | |
| 1102 | thickness direction | 2212 | second layer of the ridge |
| 1110 | first face | | |
| 1120 | second face | 3211 | first layer of the ridge |
| 1200 | out-coupling grating | | |
| 1201 | primary lateral direction | 3212 | second layer of the ridge |
| 1202 | secondary lateral direction | 4211 | first layer of the ridge |
| Z1 | zoom 1 | | |
| 4212 | second layer of the ridge | 6240 | out-coupling grating |
| | | 7000 | vehicle |
| 5001 | first layer of the substrate | 7100 | vehicular display device |
| 5002 | second layer of the substrate | 7110 | display structure |
| | | 7111 | waveguide |
| 5003 | third layer of the substrate | 7112 | in-coupling structure |
| | | 7113 | primary exit pupil expansion structure |
| 6000 | display device | | |
| 6100 | frame | 7114 | secondary exit pupil expansion structure |
| 6200 | display structure | | |
| 6201 | light | 7115 | out-coupling structure |
| 6210 | waveguide | | |
| 6220 | in-coupling grating | 7120 | optical engine |
| 6230 | intermediate pupil expansion structure | 7200 | window |
| 6250 | optical engine | | |

## Claims

1. A display structure (1000), comprising:
a waveguide (1100) comprising a first face (1110) and a second face (1120) for confining light (1101) in the waveguide (1100) by total internal reflection, the second face (1120) arranged towards a thickness direction (1102) from the first face (1110); and
a diffractive out-coupling grating (1200) arranged on the first face (1110),
wherein the out-coupling grating (1200) comprises a plurality of ridges (1210), wherein each of the ridges (1210) comprises a first layer (2211, 3211, 4211) and a second layer (2212, 3212, 4212), the second layer (2212, 3212, 4212) being arranged over the first layer (2211, 3211, 4211), wherein the second layer (2212, 3212, 4212) extends from the first face (1110) in a direction forming a slant angle (a₂) with the thickness direction (1102) of the waveguide (1100), wherein the slant angle (a₂) is a second slant angle (a₂), and wherein the first layer (2211, 3211, 4211) extends from the first face (1110) in a first direction forming a first slant angle (a₁) with the thickness direction (1102) of the waveguide (1100), wherein the first layer comprises a first material having a first refractive index at a visible wavelength and the second layer comprises a second material having a second refractive index at a visible wavelength;
**characterized in that** the second slant angle (a₂) is larger than the first slant angle (a₁).

2. A display structure (1000) according to claim 1, wherein the second slant angle (a₂) is greater than or equal to 30° and/or less than to 70°.

3. A display structure (1000) according to any of claims 1 to 2, wherein the first slant angle (a₁) is less than or equal to 70°.

4. A display structure (1000) according to any of claims 1 to 3, wherein the first slant angle (a₁) is equal to zero.

5. A display structure (1000) according to any preceding claim, wherein a slant angle difference (Δa) between the second slant angle (a₂) and the first slant angle (a₁) is greater than or equal to 5° , or to 10°, or to 15°, and/or less than or equal to 30°, or to 40°, or to 50°.

6. A display structure (1000) according to any preceding claim, wherein the first layer (2211, 3211, 4211) has a first height (h₁), the first height (h₁) is greater than or equal to 10 nm, and/or less than or equal to 50 nm.

7. A display structure (1000) according to any preceding claim, wherein the second layer (2211, 3211, 4211) has a second height (h₂), the second height F(h₂) is greater than or equal to 50 nm and/or less than or equal to 150 nm.

8. A display structure (1000) according to any preceding claim, wherein the first refractive index (n₁) is greater than or equal to 1.8 and/or less than or equal to 2.6.

9. A display structure (1000) according to any preceding claim, the second refractive index (n₂) is greater than or equal to 1.2 and/or less than or equal to 1.7.

10. A display structure (1000) according to any preceding claim, wherein the first material is titanium dioxide, and the second material is silicon dioxide.

11. A display device (6000, 7100), comprising a display structure (6200, 7110) according to any of the preceding claims.

12. A display device (6000, 7100) according to claim 11 implemented as a see-through display device, or as a head-mounted display device.

## Patentansprüche

1. Anzeigestruktur (1000), umfassend:
einen Wellenleiter (1100), umfassend eine erste Fläche (1110) und eine zweite Fläche (1120) zum Einschließen von Licht (1101) in dem Wellenleiter (1100) durch Totalreflexion, wobei die zweite Fläche (1120) in einer Dickenrichtung (1102) von der ersten Fläche (1110) angeordnet ist; und
ein diffraktives Auskoppelgitter (1200), das auf der ersten Fläche (1110) angeordnet ist,
wobei das Auskoppelgitter (1200) eine Mehrzahl von Stegen (1210) umfasst, wobei jeder der Stege (1210) eine erste Schicht (2211, 3211, 4211) und eine zweite Schicht (2212, 3212, 4212) umfasst, wobei die zweite Schicht (2212, 3212, 4212) über der ersten Schicht (2211, 3211, 4211) angeordnet ist, wobei sich die zweite Schicht (2212, 3212, 4212) von der ersten Fläche (1110) in einer Richtung erstreckt, die einen Neigungswinkel (a₂) mit der Dickenrichtung (1102) des Wellenleiters (1100) bildet, wobei der Neigungswinkel (a₂) ein zweiter Neigungswinkel (a₂) ist, und wobei sich die erste Schicht (2211, 3211, 4211) von der ersten Fläche (1110) in einer ersten Richtung erstreckt, die einen ersten Neigungswinkel (a₁) mit der Dickenrichtung (1102) des Wellenleiters (1100) bildet, wobei die erste Schicht ein erstes Material mit einem ersten Brechungsindex bei einer sichtbaren Wellenlänge umfasst, und die zweite Schicht ein zweites Material mit einem zweiten Brechungsindex bei einer sichtbaren Wellenlänge umfasst;
**dadurch gekennzeichnet, dass** der zweite Neigungswinkel (a₂) größer als der erste Neigungswinkel (a₁) ist.

2. Anzeigestruktur (1000) nach Anspruch 1, wobei der zweite Neigungswinkel (a₂) größer als oder gleich 30° und/oder kleiner als 70° ist.

3. Anzeigestruktur (1000) nach einem der Ansprüche 1 bis 2, wobei der erste Neigungswinkel (a₁) kleiner als oder gleich 70° ist.

4. Anzeigestruktur (1000) nach einem der Ansprüche 1 bis 3, wobei der erste Neigungswinkel (a₁) gleich null ist.

5. Anzeigestruktur (1000) nach einem der vorhergehenden Ansprüche, wobei eine Neigungswinkeldifferenz (Δa) zwischen dem zweiten Neigungswinkel (a₂) und dem ersten Neigungswinkel (a₁) größer als oder gleich 5°, oder 10°, oder 15°, und/oder kleiner als oder gleich 30°, oder 40°, oder 50° ist.

6. Anzeigestruktur (1000) nach einem der vorhergehenden Ansprüche, wobei die erste Schicht (2211, 3211, 4211) eine erste Höhe (h₁) aufweist, wobei die erste Höhe (h₁) größer als oder gleich 10 nm und/oder kleiner als oder gleich 50 nm ist.

7. Anzeigestruktur (1000) nach einem der vorhergehenden Ansprüche, wobei die zweite Schicht (2211, 3211, 4211) eine zweite Höhe (h₂) aufweist, wobei die zweite Höhe F(h₂) größer als oder gleich 50 nm und/oder kleiner als oder gleich 150 nm ist.

8. Anzeigestruktur (1000) nach einem der vorhergehenden Ansprüche, wobei der erste Brechungsindex (n₁) größer als oder gleich 1,8 und/oder kleiner als oder gleich 2,6 ist.

9. Anzeigestruktur (1000) nach einem der vorhergehenden Ansprüche, wobei der zweite Brechungsindex (n₂) größer als oder gleich 1,2 und/oder kleiner als oder gleich 1,7 ist.

10. Anzeigestruktur (1000) nach einem der vorhergehenden Ansprüche, wobei das erste Material Titandioxid ist und das zweite Material Siliziumdioxid ist.

11. Anzeigevorrichtung (6000, 7100), umfassend:
eine Anzeigestruktur (6200, 7110) nach einem der vorhergehenden Ansprüche.

12. Anzeigevorrichtung (6000, 7100) nach Anspruch 11, die als eine durchsichtige Anzeigevorrichtung oder als eine kopfmontierte Anzeigevorrichtung implementiert ist.

## Revendications

1. Structure d'affichage (1000), comprenant :
un guide d'ondes (1100) comprenant une première face (1110) et une deuxième face (1120) pour confiner la lumière (1101) dans le guide d'ondes (1100) par réflexion interne totale, la deuxième face (1120) étant agencée vers une direction d'épaisseur (1102) à partir de la première face (1110) ; et
un réseau de découplage diffractif (1200) agencé sur la première face (1110), dans laquelle le réseau de découplage (1200) comprend une pluralité de crêtes (1210),
dans laquelle chacune des crêtes (1210) comprend une première couche (2211, 3211, 4211) et une deuxième couche (2212, 3212, 4212), la deuxième couche (2212, 3212, 4212) étant agencée sur la première couche (2211, 3211, 4211), dans laquelle la deuxième couche (2212, 3212, 4212) s'étend depuis la première face (1110) dans une direction formant un angle d'inclinaison (a₂) avec la direction d'épaisseur (1102) du guide d'ondes (1100), dans laquelle l'angle d'inclinaison (a₂) est un deuxième angle d'inclinaison (a₂), et dans laquelle la première couche (2211, 3211, 4211) s'étend depuis la première face (1110) dans une première direction formant un premier angle d'inclinaison (a₁) avec la direction d'épaisseur (1102) du guide d'ondes (1100), dans laquelle la première couche comprend un premier matériau présentant un premier indice de réfraction à une longueur d'onde visible et la deuxième couche comprend un deuxième matériau présentant un deuxième indice de réfraction à une longueur d'onde visible ;
**caractérisée en ce que** le deuxième angle d'inclinaison (a₂) est supérieur au premier angle d'inclinaison (a₁).

2. Structure d'affichage (1000) selon la revendication 1, dans laquelle le deuxième angle d'inclinaison (a₂) est supérieur ou égal à 30° et/ou inférieur à 70°.

3. Structure d'affichage (1000) selon l'une quelconque des revendications 1 à 2, dans laquelle le premier angle d'inclinaison (a₁) est inférieur ou égal à 70°.

4. Structure d'affichage (1000) selon l'une quelconque des revendications 1 à 3, dans laquelle le premier angle d'inclinaison (a₁) est égal à zéro.

5. Structure d'affichage (1000) selon une quelconque revendication précédente, dans laquelle une différence d'angle d'inclinaison (Δa) entre le deuxième angle d'inclinaison (a₂) et le premier angle d'inclinaison (a₁) est supérieure ou égale à 5°, ou à 10°, ou à 15°, et/ou inférieure ou égale à 30°, ou à 40°, ou à 50°.

6. Structure d'affichage (1000) selon une quelconque revendication précédente, dans laquelle la première couche (2211, 3211, 4211) présente une première hauteur (h₁), la première hauteur (h₁) est supérieure ou égale à 10 nm, et/ou inférieure ou égale à 50 nm.

7. Structure d'affichage (1000) selon une quelconque revendication précédente, dans laquelle la deuxième couche (2211, 3211, 4211) présente une deuxième hauteur (h₂), la deuxième hauteur F (h₂) est supérieure ou égale à 50 nm et/ou inférieure ou égale à 150 nm.

8. Structure d'affichage (1000) selon une quelconque revendication précédente, dans laquelle le premier indice de réfraction (n₁) est supérieur ou égal à 1,8 et/ou inférieur ou égal à 2,6.

9. Structure d'affichage (1000) selon une quelconque revendication précédente, dans laquelle le deuxième indice de réfraction (n₂) est supérieur ou égal à 1,2 et/ou inférieur ou égal à 1,7.

10. Structure d'affichage (1000) selon une quelconque revendication précédente, dans laquelle le premier matériau est le dioxyde de titane, et le deuxième matériau est le dioxyde de silicium.

11. Dispositif d'affichage (6000, 7100), comprenant une structure d'affichage (6200, 7110) selon l'une quelconque des revendications précédentes.

12. Dispositif d'affichage (6000, 7100) selon la revendication 11 mis en œuvre sous la forme d'un dispositif d'affichage à transparence, ou sous la forme d'un dispositif de type visiocasque.
